# EUROPEAN PATENT APPLICATION

(11) **EP 0 903 252 A2**
(43) Date of publication of application: **24.03.1999**
(21) Application number: 98307587.0
(22) Date of filing: 17.09.1998
(51) Int. Cl.: B60H 1/32

(54) **Bulkhead**

(30) Priority: 17.09.1997 GB 9719804
(71) Applicant: Hubbard Group Services Limited, Suffolk, IP6 9NP (GB)
(72) Inventor: Hale, Fraser John, Otley Ipswich, Suffolk, IP6 9NT (GB); Gunn, Kevin James, Orsett, Essex, RM16 3JU (GB)
(74) Representative: Kazi, Ilya

(57) **Abstract**

A bulkhead for a load space such as vehicle interior serves to separate air within the interior into separate compartments, and also has means for supplying cooled air to one or more of the compartments. The bulkhead may be used to provide compartments for distribution of chilled goods at different temperatures, with independent control of the temperature either side of the bulkhead. The integration of the cooled air supply within the bulkhead housing allows a substantial reduction in the load space lost with a conventional arrangement in which the cooled air supply is separately provided.

## Description

The present invention relates to a bulkhead for dividing a load space in which goods are transported.

When transporting goods, it is usual to provide bulkheads for dividing the load space of the vehicle, ship or aircraft into separate compartments. There is often a need for the compartments to be cooled, for instance when transporting fresh produce. In the past this has been done by providing a refrigeration unit attached to the load space.

There are a number of disadvantages with the prior art arrangement. The refrigeration unit is always present in the load space, even when transporting goods which do not require refrigeration. This reduces the size of the load space and results in inefficient usage of the refrigeration unit. Conversely, it is not possible to transport goods which need to be cooled in a container which is not especially adapted for this purpose.

In some cases it may only be necessary to cool one compartment. In the prior art this is usually done by providing an insulating bulkhead. However, as the refrigeration unit is usually designed to cool the whole of the load space, this may not always be possible or convenient. Alternatively, it may be necessary to provide different zones at different temperatures. In the prior art this has been done by providing an insulating bulkhead and separating the load space into cool and less cool zones. This rough and ready approach does not allow for accurate control of the temperatures in the zones.

European Patent Application EP-A-0327388 discloses a multi-compartment temperature-controlled road vehicle, in which separate compartments within a vehicle are cooled by separate refrigeration systems which are mounted on the walls of the load space. This arrangement allows each compartment to be cooled independently. However, providing a separate refrigeration unit for each compartment is expensive, and reduces the amount of load space available for transporting goods. The refrigeration units are provided in the compartments even when not required, such as may be the case when a compartment is empty or contains goods which do not require cooling, which results in inefficient use of the refrigeration units.

The problems in the prior art are alleviated according to the invention by providing a bulkhead for dividing a load space into separate compartments in which goods can be conveyed and for providing substantial separation between air flowing in said separate compartments, the bulkhead having integrated therewith means for cooling at least one of the compartments.

Cooling is preferably effected by supplying cooled air, preferably air drawn from the compartment and recirculated.

The bulkhead according to the invention provides the advantage that the means for supplying cooled air are integrated with the bulkhead itself. This allows more efficient use of the cooling unit, since it may be inserted or removed from a load space as required, together with the bulkhead. The means for supplying cooled air may be at least partially, and preferably substantially, integrated within the bulkhead walls, which minimises the infringement on the load space.

The bulkhead of the invention can be used to cool just one side of the bulkhead, which results in a increased efficiency due to the reduced volume that is cooled in comparison to the prior art refrigeration unit which cools the whole of the load space. Alternatively, the bulkhead may cool both sides of the bulkhead. In this case the two sides of the bulkhead may be cooled individually, which allows the temperature of the air on either side of the bulkhead to be controlled separately.

Adjustable vents may be provided on the bulkhead for directing or shutting off the air supply. This allows flexibility in the distribution of the air supply to take into account the type and the distribution of goods in the load space.

Embodiments of the present invention will now be described by way of example with reference to the accompanying drawings in which:
Figure 1 is a block diagram of a refrigeration circuit for use with the present invention; and
Figures 2 show end, top and side views of a bulkhead according to a preferred embodiment of the present invention.

Throughout this specification, the term bulkhead is intended to imply a dividing partition within a load space, particularly the load space of a vehicle. The position of the bulkhead is preferably adjustable, and the bulkhead may be removable. The bulkhead serves the function of providing substantial separation between air flows either side of it.

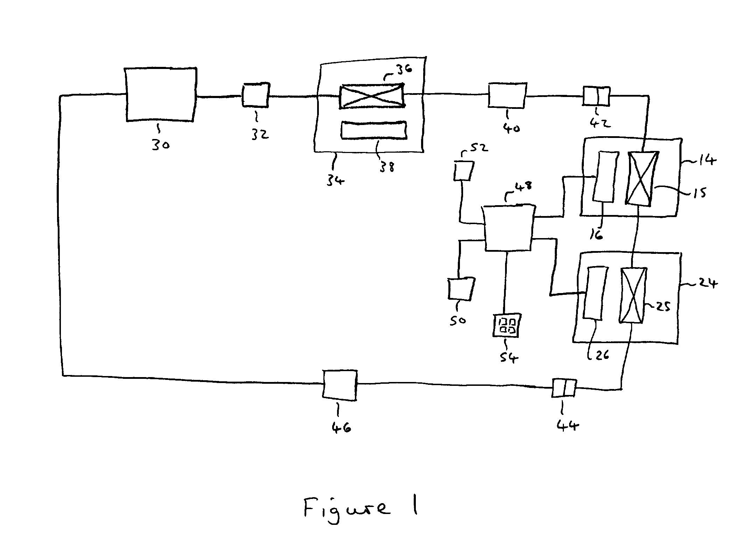

Referring to Figure 1, a refrigeration circuit for a vehicle comprises compressor 30, valve 32, condenser unit 34 comprising condenser coils 36 and fan 38, expansion valve 40, connector 42, heat exchange units 14,24 comprising respective heat exchange coils 15,25 and fans 16,26, connector 44 and valve 46. The heat exchange units 14,24 are an integral part of bulkhead 10, while the compression and condensing units are located elsewhere on the vehicle.

In operation, fluid exits compressor 30 in gaseous form and passes via valve 32 to condenser coils 36. Air from outside the load space is drawn over the condenser coils 36 by fan 38, which causes the gaseous fluid to condense to a liquid. The fluid then passes through expansion valve 40, after which the fluid loses pressure and evaporates, thereby cooling down. The cooled fluid then passes into the heat exchange coils 15,25. The fans 16,26 blow air over the heat exchange coils 15,26 and the cooled air thereby produced is directed into the load space. The fluid from the heat exchange coils then flows back to the compressor via valve 46, and the cycle is repeated.

In the embodiment shown, the heat exchange coils 15,25 are connected in series; this arrangement is appropriate when different temperatures are to be maintained, the cooler heat exchanger being connected upstream. Alternatively, the heat exchangers may be connected in parallel.

Also shown in Figure 1 are temperature controller 48, temperature sensors 50, 52, and input means 54 such as a keypad. The input means allows a user to input desired temperatures on each side of the bulkhead to the temperature controller 48. Each temperature sensor senses the temperature of the air on the corresponding side of the bulkhead and outputs the sensed value to the temperature controller 48. The temperature controller 48 adjusts the speeds of the fans 16,26 in dependence on the difference between the desired temperatures and the sensed temperatures.

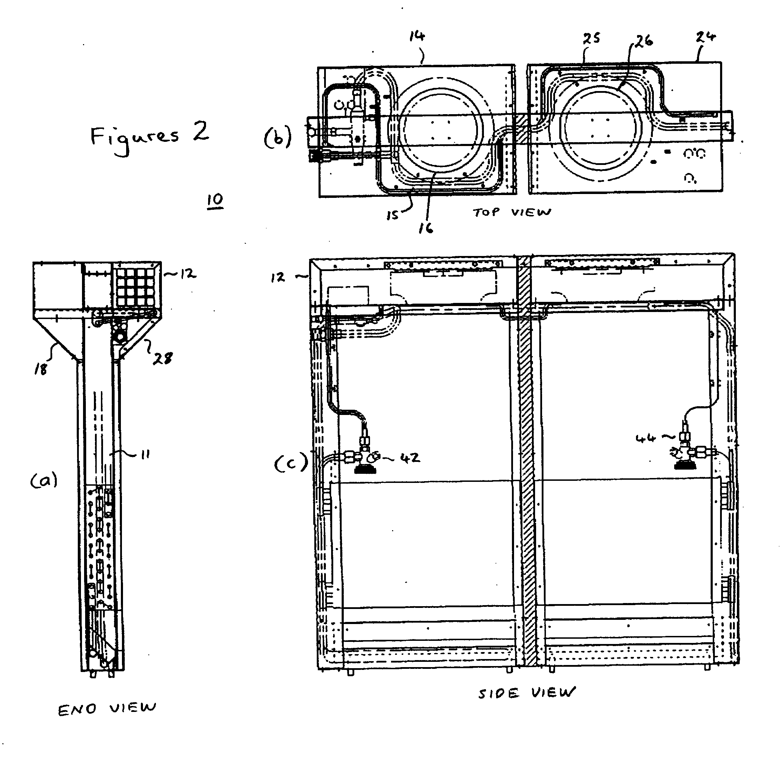

Referring to Figure 2, the bulkhead 10 is made of an insulating material 11, and has heat exchange units 14,24 contained in an insulated housing 12 which forms part of the bulkhead. The bulkhead 10 has a cross-section that is narrow along most of its length, but which widens at one end to accommodate the heat exchange units 14,24. The heat exchange units 14,24 comprise respective heat exchange coils 15,25 and fans 16,26. The heat exchange units will generally be located at the top of the bulkhead, which allows optimum air flow and minimum infringement on the load space. However, they could alternatively be located at the bottom or the side of the bulkhead to allow the accommodation of certain goods within the load space. Connectors 42,44 are provided for connecting the bulkhead to the compressor and condenser units, which are mounted elsewhere on the vehicle, typically outside the load space or at least exhausting heat to the outside.

One of the heat exchange units 14 has a vent 18 which opens onto one side of the bulkhead, while the other heat exchange unit 24 has a vent 28 that opens onto the other side. Air blown over the heat exchange coil 15 by fan 16 is directed to one side of the bulkhead via vent 18, while air blown over heat exchange coil 25 by fan 26 is directed to the other side of the bulkhead by vent 28. The vents may be adjustable so that air flow may be directed to a certain area or shut off. For example, each heat exchange unit may have a vent on each side of the bulkhead, and each vent may be opened or closed so that air flow may be directed to one side or the other, or to both sides, of the bulkhead.

In the apparatus shown, the heat exchange units 14,24 and the vents 18,28 are located at the top of the bulkhead, with the vents 18,28 directing cooled air down into the corresponding compartments. This arrangement provides efficient and even cooling of the compartments with minimal infringement on the load space. However, the heat exchange units could be located elsewhere, for example at the side or the bottom of the bulkhead, as the arrangement of the load space or the type of goods to be transported requires.

It will be appreciated that, in contrast to the prior art where refrigeration units are mounted on the walls of the load space, the present embodiment provides a bulkhead for dividing the load space, with integral heat exchange units. The apparatus shown thus provides a means of mechanically cooling zones on either side of the bulkhead without infringing substantially upon the load space, with substantially no mixing of air flows from one side to another and without sacrificing accuracy of temperature control.

Each heat exchange unit may be of the same type, or alternatively they may be of different types. For example, one heat exchange unit may be suitable for providing deep freezing temperatures (for example, -18°C), while the other heat exchange unit may be suitable for providing light or moderate cooling or chilling (for example 4 °C).

In an alternative embodiment, only one heat exchange coil and one fan may be provided, and the air flow from this coil and fan is lead to one side of the bulkhead only. In such an embodiment only a single temperature control device is provided, for regulating the temperature on that side of the bulkhead. The bulkhead of such an embodiment is useful when transporting goods some of which need to be cooled and some of which do not.

In a further embodiment, only one heat exchange coil and one fan is provided, but the air flow is led to both sides of the bulkhead. This reduces the complexity of the bulkhead, at the expense of removing the ability to control the temperatures on either side of the bulkhead separately. Alternatively, a single heat exchange coil may be provided, operating at a temperature below the temperature of the colder of the two compartments, and different temperatures maintained in each compartment by varying the rate of air flow past the heat exchange coil independently for each compartment. This arrangement will normally require two fans, but in some cases, a single fan with appropriate, preferably adjustable, ducting may be employed.

It is, however, generally desirable to maintain substantial isolation between the air flows on either side of the bulkhead, which is not easily attainable with a single fan.

The bulkhead preferably circulates air in each compartment at a sufficient rate to maintain an approximately even (within the tolerance limits required) air temperature throughout each compartment. This will normally be integrated with the function of cooling the air, or supplying cooled air, but may be supplemented by additional fans.

To maintain different temperatures, the bulkhead incorporates temperature control means for each side. In practice, the functions of both temperature controllers will normally be integrated into a single controller, with separate sensors for each side.

Although the invention has been described with reference to a direct expansion heat exchanger coil, any type of heat exchanger capable of supplying cooled air may be used.

In certain circumstances, it may be desired to provide heating to one or both sides of the bulkhead, for example, where the outside temperature is below that at which the load space is to be controlled, or where a chilled or frozen side of the bulkhead causes heat loss from the other side of the bulkhead, which is not required to be chilled. In such circumstances, the refrigeration unit may operate in a reverse cycle mode, with the appropriate changes to the refrigeration circuit. Alternatively, where one side of the bulkhead is to be cooled and the other side is to be heated, warmed air from the condenser coils may be directed to one side of the bulkhead, while cool air from the heat exchange coils is directed to the other side of the bulkhead.

Another preferred feature is the inclusion of a sterilising or air purifying unit within the bulkhead housing. Most preferably, the bulkhead housing incorporates an ozone disinfection unit. This can result in a supply of cleaner air, without infringing on the load space.

The bulkhead will typically be arranged to maintain mutually different temperatures either side, and ideally allows only a small amount of heat to flow between the compartments in comparison to the capacity of the heat exchanger (which must have capacity to absorb heat which enters from other sources, normally the walls of the load space). Thermal flow of half the capacity of the heat exchanger or more will usually be unacceptable. Ideally, heat losses due to the bulkhead are at most equal to 1/5, or better 1/10h or better still of the order of at most 1-5% of the heat exchanger capacity. This may be achieved by shaping the bulkhead so that air flows are kept separate, and the bulkhead may normally be made more compact if an insulating barrier, for example of plastics, and preferably a foamed material such as expanded polystyrene, or rockwool, is employed. It is to be noted, however, that heat flow through the bulkhead is not as critical as heat flow through the load space walls; in the case of heat flow through the bulkhead, although the colder compartment will be heated, thus increasing the energy requirement to maintain that compartment at the desired temperature, the warmer compartment will be cooled, thereby reducing the requirement for that compartment.

The embodiment has a number of preferred features, each of which can be provided independently. Example of some advantageous features which may be provided independently of other features of the embodiment include:-
- Substantially horizontal mounting of the axis of a fan, preferably near or at the top of a substantially vertical bulkhead; this enables a relatively thin bulkhead which infringes relatively little on the useable load space to be provided.
- The provision of two separate cooling airflows on opposite sides of a bulkhead, preferably cooled by a common refrigerant circuit.
- Positioning of a moveable bulkhead within a vehicle, the bulkhead having means for supplying cooled air to the vehicle interior.

The appended abstract is incorporated herein by reference.

## Claims

1. A bulkhead for dividing a load space into separate compartments in which goods can be conveyed and for providing substantial separation between air flowing in said separate compartments, wherein the bulkhead has integrated therewith means for cooling at least one of said compartments.

2. A bulkhead according to claim 1, the bulkhead comprising bulkhead walls, wherein the cooling means is at least partially integrated within the bulkhead walls.

3. A bulkhead according to either of claim 1 or 2 wherein said cooling means comprises at least one heat exchange coil and at least one fan for directing airflow across the coil.

4. A bulkhead according to any of claims 1-3 further comprising at least one vent for directing cooled air to one side of the bulkhead only.

5. A bulkhead according to claim 4 further comprising at least one temperature control means for controlling the temperature of the air on said at least one side of the bulkhead.

6. A bulkhead according to any of claims 1-3 further comprising at least one vent on each side of the bulkhead for directing cooled air to each side of the bulkhead.

7. A bulkhead according to claim 6 wherein said cooled air supplying means comprises a first cooling means for cooling one side of the bulkhead and a second cooling means for cooling the other side of the bulkhead.

8. A bulkhead according to claim 7 wherein said first cooling means comprises a first heat exchange coil and a first fan and said second cooling means comprises a second heat exchange coil and a second fan, wherein said first heat exchange coil said second heat exchange coil are arranged for connection to a common condenser.

9. A bulkhead according to claim 7 or 8 further comprising temperature control means for controlling the temperature on each side of the bulkhead independently.

10. A bulkhead according to any of claims 7 to 9, arranged to maintain mutually different temperatures on each side, the bulkhead being arranged so that, in use with said mutually different temperatures maintained either side of the bulkhead, the heat flow through the bulkhead is substantially less than the heat which can be absorbed by said cooling means.

11. A bulkhead according to Claim 10, wherein the heat absorption capacity of the cooling means is at least double, preferably at least 5 times the magnitude of said heat flow through the bulkhead.

12. A bulkhead according to Claim 10 or 11 incorporating a barrier of thermally insulating material between air on either side of the bulkhead.

13. A bulkhead according to any of claims 4 to 12 wherein said at least one vent is adjustable whereby the air flow may be directed or shut off.

14. A bulkhead according to any of the preceding claims, wherein the position of the bulkhead is adjustable within the load space, and preferably the bulkhead is removable from the load space.

15. A bulkhead according to any preceding claim arranged to generate or assist circulation of air within at least one compartment adjacent the bulkhead to reduce variation in air temperature within the or each compartment.

16. A bulkhead according to any preceding claim further including means integrated with the bulkhead for purifying, sterilising or disinfecting the air within at least one compartment.

17. A bulkhead for dividing a load space into separate compartments in which goods can be conveyed and for providing substantial separation between air flowing in said separate compartments, the bulkhead further comprising means for cooling compartments on either side of the bulkhead, the cooling means being integrated within the bulkhead housing and incorporating means for circulating air from each of said compartments past at least one heat exchanger for abstracting heat from the air, the air flows in each compartment between maintained substantially mutually separate, the bulkhead further including temperature control means for maintaining mutually different temperatures on either side of the bulkhead, the bulkhead being arranged so that heat flow through the bulkhead is substantially less than the heat absorbing capacity of the or each heat exchanger.

18. Use of a bulkhead comprising integrated cooling means for partitioning a load space and for cooling at least one portion of the load space so partitioned.

19. A vehicle including a bulkhead according to any of Claims 1 to 18 and means for exhausting heat abstracted from a portion of the vehicle load space cooled by the bulkhead to the exterior of the load space.

20. A method of providing a cooled vehicle load space comprising: providing a bulkhead within the vehicle load space to partition the load space; supplying refrigerant fluid to the bulkhead; expanding the fluid to cool the fluid; passing the cooled fluid through a heat exchanger in the bulkhead; circulating air from at least one partition of the load space in contact with the heat exchanger to cool the air; extracting expanded refrigerant fluid; compressing the fluid; and exhausting heat from the compressed fluid outside said at least one partition of the load space.
